# EUROPEAN PATENT APPLICATION

(11) **EP 2 921 657 A1**
(43) Date of publication of application: **23.09.2015**
(21) Application number: 14160939.6
(22) Date of filing: 20.03.2014
(51) Int. Cl.: F01D 25/26, F01D 25/28

(54) **Tool for removing an inner casing from a turbomachine**

(71) Applicant: ALSTOM Technology Ltd, 5400 Baden (CH)
(72) Inventor: Huber, Tobias Christoph, 79737 Herrischried (DE); Froidevaux, Gerard, 5314 Kleindoettingen (CH); Seng, Daniel, 5453 Busslingen (CH); Schwarz, Karsten, 5415 Nussbaumen (CH); Rozman, Ivan, 5415 Nussbaumen (CH)
(74) Representative: Alstom Technology Ltd

(57) **Abstract**

Tool for installing or uninstalling a segment of an inner housing (5) of a turbomachine 1, wherein this turbomachine (1) comprises an outer housing (2), at least partially surrounding an inner housing (5) and a rotor (10), concentrically arranged within the inner housing (5), the rotor (10) being equipped with a number of rotor grooves, and wherein the inner housing (5) is divided at an essentially horizontal split plane (9) into an upper segment (6) and a lower segment (7), characterized in that the tool (15) comprises a first portion (16), this portion (16) being insertable into any of said rotor grooves, and furthermore comprises a second portion (17), disposed at a distance from the first portion (16), this second portion (17) being connectable to the lower segment (7) of the inner housing (5).

## Description

### TECHNICAL FIELD

The present invention relates to a tool for removing an inner casing from a turbomachine. A turbomachine in the context of this description is a machine having an inner housing, an outer housing, at least partially surrounding said inner housing, and a rotor, concentrically arranged within the inner housing, the rotor being equipped with a number of blades, inserted into rotor grooves, and wherein the inner housing is divided at an essentially horizontal split plane into an upper part and a lower part. In particular, such turbomachines are axial turbines or axial compressors.

### BACKGROUND

Components in a turbomachine, particularly blades and vanes in a gas turbine, have to withstand very hard operating conditions, thus they need periodical checks and controls.

Different methods are known to get access to the vanes and blades.

For example, firstly the upper part of the outer casing is removed, then, secondly, the upper part of the inner casing is removed, and at least the rotor is removed in order to access the vanes at the bottom part of the inner casing.

It is a disadvantage of this method that removing of the rotor is very time consuming and requires complex lifting equipment. Therefore, this method is avoided, whenever possible.

For avoiding said disadvantage it is alternatively known, firstly to remove the upper part of the outer casing, secondly to remove the upper part of the inner casing, then to replace the upper part of the inner casing by a half-ring segment and then to provide rollers between the lower parts of the outer and the inner casing.

This way, the lower part of the inner casing can be rotated on the rollers, bringing it to the top of the machine, such that it can be removed without removing the rotor.

This method can cause damages between the adjacent parts of the inner and outer casing. For example, this can be caused by the possible relative axial displacement of the inner and outer casing, such that adjacent surfaces of the inner and outer casing that normally are separated by a gap, come into contact. A risk to damage sensitive parts is immanent.

According to a non-disclosed method for removing the inner casing from a turbomachine, having an outer casing, an inner casing within the outer casing and a rotor within the inner casing, the risk of damages is avoided by conducting the following steps: (1) removing the upper part of the outer casing, (2) removing the upper part of the inner casing, (3) connecting the lower part of the inner casing to the rotor, such that the lower part of the inner casing is supported by the rotor, (4) rotating the rotor around its longitudinal axis to roll out the lower part of the inner casing to an accessible position, (5) removing the lower part of the inner casing.

This method allows rotation of the inner casing without the need of providing supports from a static part against the inner casing, e.g. between the inner casing and the outer casing. These supports could deform the inner casing and thus change the relative distance between rotor and inner casing, with the risk of damaging rotor or stator components.

In addition, this method allows rotation of the inner casing around the rotor axis, but this rotation is not carried out by sliding the inner casing on supports. This is advantageous, because the tolerances of the inner casing are such that during rotation (the inner casing slides on supports) the distance between rotor and inner casing can change with the risk of damaging.

This method requires a suitable tool to support the lower segment of the inner casing in a defined distance to the rotor.

### SUMMARY

It is an object of the present invention to provide a tool for installing or uninstalling the lower segment of the inner housing of a turbomachine, which allows a fixed connection between the inner casing and the rotor of the turbomachine at a defined distance.

This object is obtained by a tool for installing or uninstalling the lower segment of the inner housing of a turbomachine according to claim 1.

The tool according to the invention comprises a first portion, this portion being insertable into a rotor groove, and furthermore comprises a second portion, disposed at a distance from the first portion, and this second portion being connectable to the lower segment of the inner housing.

According to a preferred embodiment said first portion of the tool is complementarily designed to the shape of the rotor grooves, e.g. designed as a fir tree.

According to another embodiment the tool comprises a first portion, designed for insertion into any of the rotor grooves, a second portion, designed to be connected to a part of the lower segment of the inner housing, and a platform connecting said first portion to said second portion.

Preferably, that second portion is designed as an essentially rectangular connection plate, being essentially orthogonally joined to said platform.

For increasing the strength of the tool the platform and the connection plate may be supported by at least one stiffener, such as a stiffening plate, joined to the narrow sides of both, the platform and the connection plate.

For connecting the tool to a part of the lower segment of the inner housing the second portion is equipped with one or more through holes for a fastener, e.g. at least one screwed bolt, to be screwed into said part of the lower segment.

Said part of the lower segment of the inner housing may be an accessible surface of the lower segment. Preferably, the second portion of the tool is designed to be connected to the surface at the split plane.

Alternatively, the removed upper segment of the inner housing is replaced by at least one dummy half ring. In this case the second portion of the tool is designed to be connected to this half ring. An advantage of this embodiment is the easy access to the relevant components for installing the tool.

According to just another embodiment instead of a dummy in form of a complete half ring, two dummy segments are attached to the lower housing segment. To each of the both ends in the split plane a dummy segment is attached. At least two tools according to this invention connect the rotor with these dummy segments and in so doing with the lower housing segment.

The use of the inventive tool for installing or uninstalling the lower segment of an inner housing of a turbomachine implicates a number of advantages.

The inner casing segment is connected to the rotor. It is reliably locked in its position, especially its radial position, by mounting in rotor blade grooves. When being rotated with the rotor, a defined and constant radial distance between sensitive parts is ensured.

The application of the tool according to this invention does not require any additional machining of the sensitive rotor.

Compared to the known method of insertion of additional rollers between the outer casing and the inner casing for rolling out the lower segment of the inner housing the use of the inventive tool effects a significant decrease of expenditure of work and time.

### BRIEF DESCRIPTION OF THE DRAWINGS

Further characteristics and advantages of the invention will be more apparent from the description of a preferred but not exclusive embodiment of the inventive tool and its use, illustrated by way of example in the accompanying drawings, in which:
Figures 1 through 6 illustrate schematically the steps of removing the lower segment of the inner housing from the turbomachine;
Figure 7 illustrates the tool during operation, i.e. the tool connected to the rotor and to the lower segment of the inner housing;
Figure 8 illustrates the assembly of the tool according to the invention;
Figures 9 through 12 show different options of use of the tool.

### DETAILED DESCRIPTION OF EXEMPLARY EMBODIMENTS

A gas turbine 1 includes an outer housing 2 with an upper segment 3 and a lower segment 4, in addition it includes an inner housing 5 with an upper segment 6 and a lower segment 7. The upper and lower segments 3, 6, 4, 7 of the outer and inner housings 2, 5 are divided at a split plane 9 with an essentially horizontal axis.

The inner housing 5 houses a rotor 10, rotating around a longitudinal axis 11.

The inner housing 5 is a vane carrier, equipped with vanes 12. The rotor 10 is equipped with radially extending blades 13, fixed in rotor grooves with a fir tree profile 14 by a foot with a complementary fir tree profile 14.

In order to remove the inner housing 5 without removing the rotor 10 the following steps are carried out.

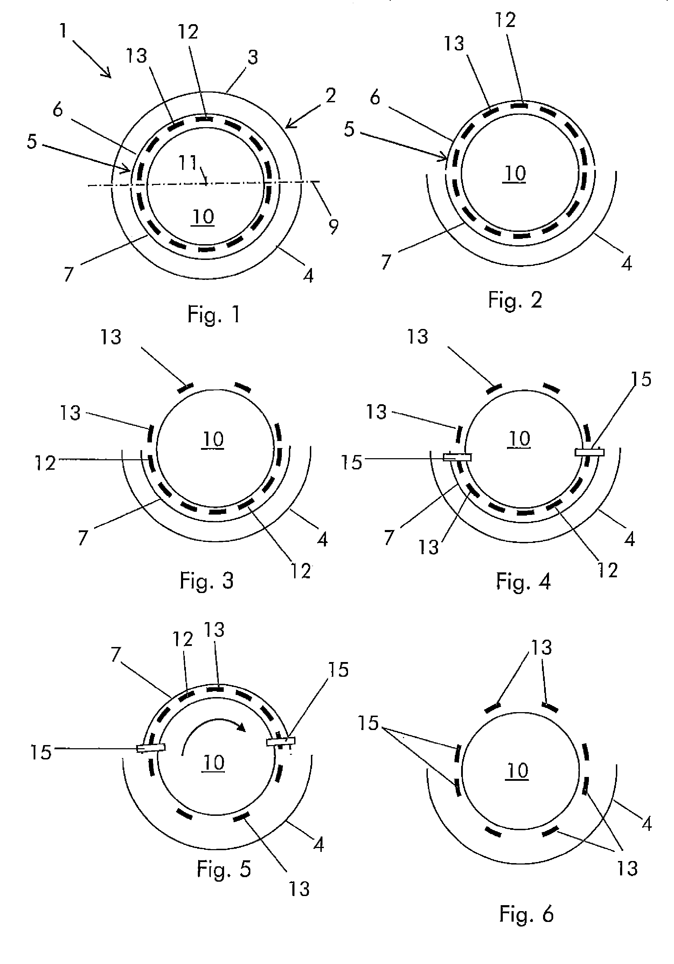

The upper segment 3 of the outer housing 2 is removed (Fig. 2); then the upper segment 6 of the inner housing 5 is removed (Fig. 3).

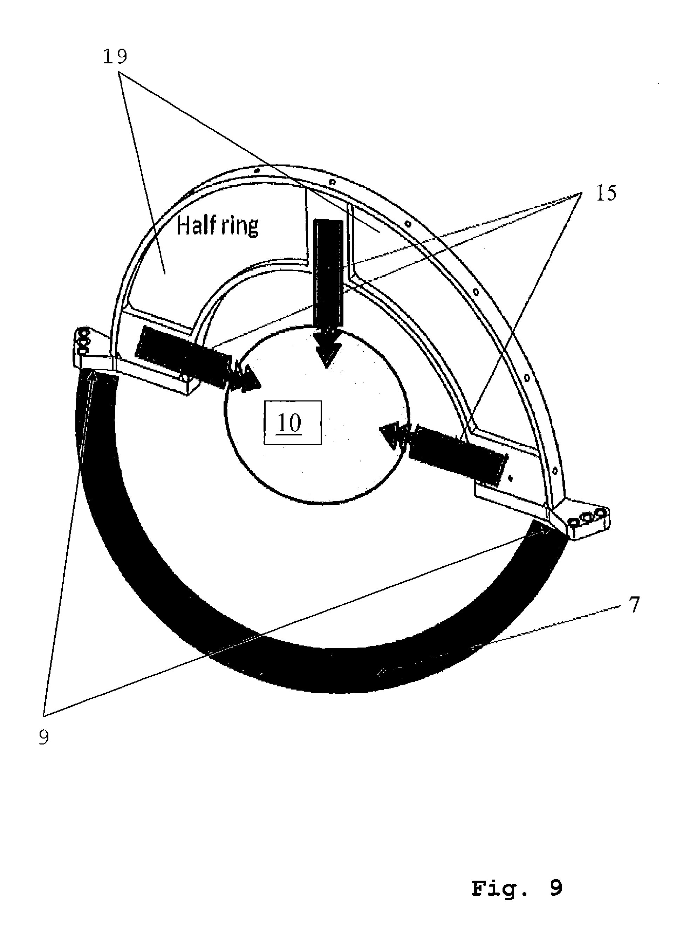

Afterwards the lower segment 7 of the inner housing 5 is fixedly connected to the rotor 10 by the tool 15. Fig. 4 shows schematically that the tool 15 is connected to the lower segment 7 at a surface in the split plane 9. Other suitable attachment surfaces are inwardly extending projections of the inner housing 5. Possible options for directly or indirectly connecting the tool 15 to the inner housing 5 are disclosed in connection with the discussion of figures 9 through 12.

After the fixed connection between rotor 10 and the lower segment 7 by the tools 15 is completed, the rotor 10 is slowly rotated by a half turn around its longitudinal axis 11. Driven by the rotor 10, the lower segment 7 moves to an upper position (Fig. 5) and is now accessible either for a check or for removing it from the machine (Fig. 6).

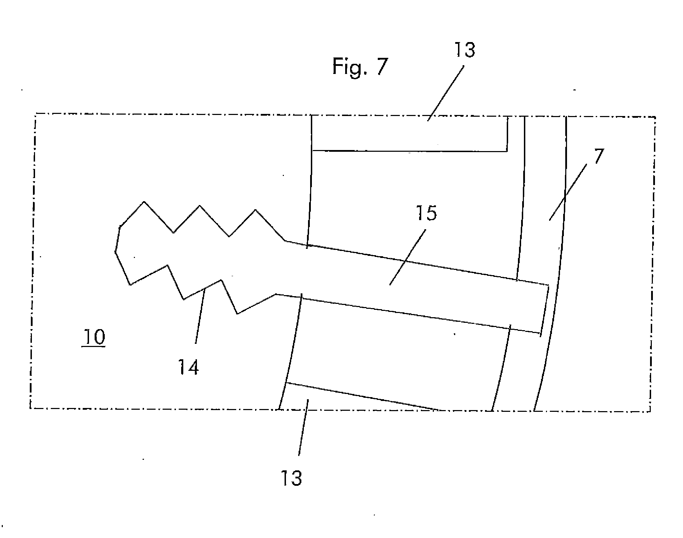

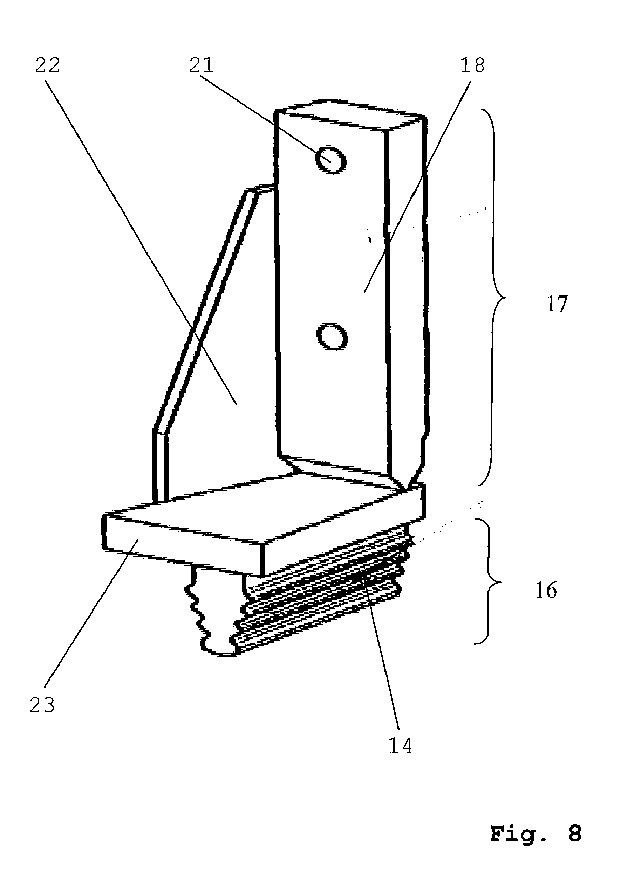

To connect the tool 15 with the rotor 10, as schematically shown in Fig. 7, at least one blade 13 is removed from a rotor groove to open up a free place in the rotor groove. In a next step, the inventive tool 15 is inserted into the opened up place in the rotor groove. For this purpose, as shown in Fig. 8, the tool 15 is equipped with a first portion 16, designed and dimensioned in accordance with the profile 14 of the rotor grooves, in this example designed as a fir tree 14 with the same parameters as the complementary rotor groove profile 14. By this fir tree foot 16 the tool 15 is fixed in the rotor 10 (see Fig. 7). Again referring to Fig. 8, a second portion 17 of the tool 15 is designed and dimensioned in such a way that it can be connected directly or indirectly to the lower segment 7 of the inner housing 5. First portion 16 and second portion 17 are connected to each other by a platform 23. This second portion 17 comprises a rectangular connection plate 18. And this connection plate 18 is equipped with a suitable fastener to fixedly connect the tool 15 to the inner housing 5. These fasteners may be means for a form-locking or a friction-locking join. According to one embodiment the connection plate 18 is equipped with through holes 21 for a fastener, such as a screwed bolt to be screwed in an adjacent part of the inner housing 5. A stiffener, e.g. a stiffening plate 22, is joined to the narrow sides of the platform 23 and the connection plate 18 to increase the mechanical stability of the tool 15.

Fig. 9 schematically illustrates a first advantageous option, how to apply the inventive tool for installing or uninstalling the lower segment 7 of the inner housing 5. After having removed the upper segment 6 of the inner housing 5 from the machine 1, the upper segment 6 is replaced by a dummy in form of a half ring 19. At the split plane 9 the ends of the dummy half ring 19 and the lower segment 7 are connected. In three different circumferential positions at the upper part of the rotor 10 a blade 13 is removed from the rotor 10. Into the opened up free place of the respective rotor groove the foot 16 of tool 15 is inserted. By connection plate 18 the tool 15 is fixedly joined to the dummy half ring 19. For example three tools 15 are used to connect rotor 10 and dummy half ring 19. The e.g. three tools 15 may be joined exclusively - as shown in this figure - to the dummy half ring 19. It is an advantage of this alternative that the tool 15 and the dummy half ring 19 can be equipped with specifically adapted contact areas 21 at an easily accessible place. For example, this provides the option to equip these areas 21 with purpose-adapted, easily manageable fixing means. One preferred option for connecting the tool 15 to the dummy ring 19 - and therewith to the lower housing segment - is to equip the connection plate 18 of the tool 15 with through holes 23 for screw bolts and to screw these bolts in provided threaded holes at the dummy 19. But, as mentioned, any other suitable joints are possible.

Of course there is also an option to join a part of the tools 15 to the dummy 19 and to join another part directly to the lower segment 7.

Advantageously, the dummy ring 19 is positioned at an axial level with the possibility of easily removing a number of blades 13 from the rotor 10 and thereat inserting the tools feet 16 into a rotor groove.

Usually, between two and four tools 15 are used to fixedly connect the lower segment 7 with the rotor 10.

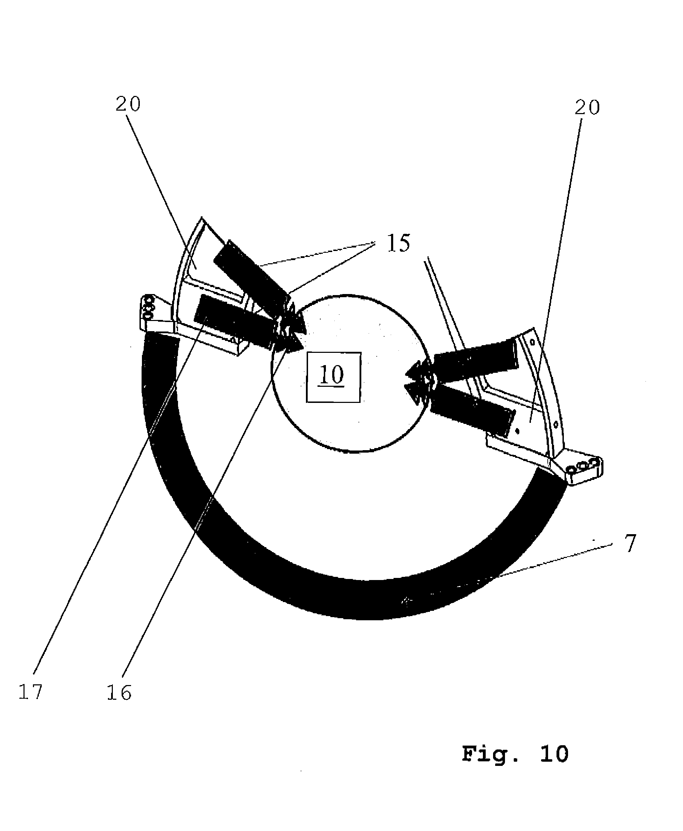

Another option how to use the inventive tool is illustrated in Fig. 10. Instead of connecting a complete half ring 19 to the lower segment 7, only two segments of such a ring are applied. At the split plane 9 the two dummy segments 20 are attached to the lower segment 7 at a suitable axial level of the machine 1 and by using, whenever possible, the existing connection members at the segment 7. The dummy segments 20 are designed to provide contact surfaces for the connection plates 18 of tools 15 and the fasteners. Fig. 10 shows an embodiment using four tools 15 to fixedly connect the rotor 10 with the inner segment 7. According to this preferred embodiment four tools 15 are used. Again: It is also possible to join a part of the tools 15 to the dummy segments 20 and to join the remaining tools 15 directly to the housing segment 7.

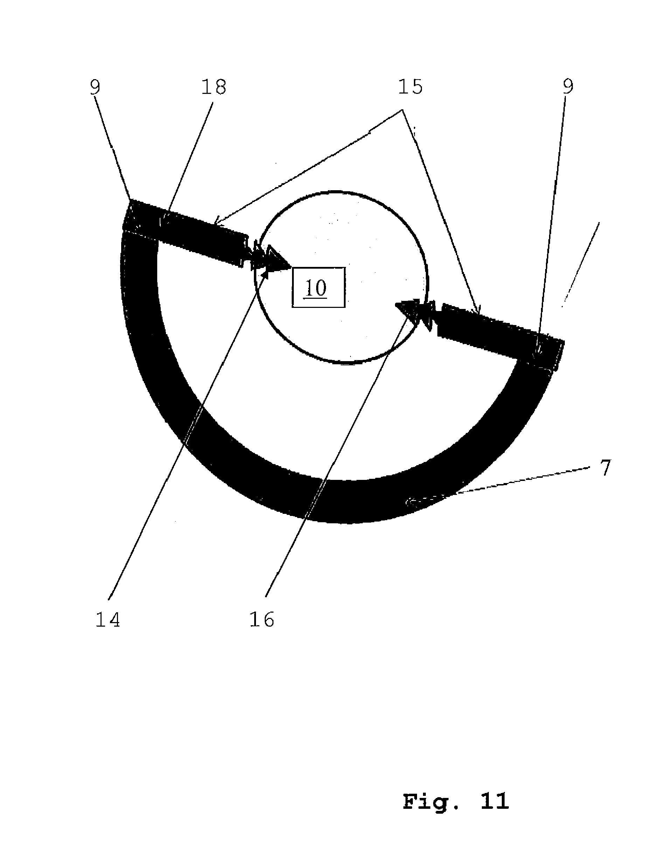

Fig. 11 illustrates an option of use the inventive tool that requires the least expenditure of time and work. Two tools 15 are used, thereby one tool 15 is attached to each end face of the lower segment 7 in the split plane 9. The design of the connection plates 18 of tools 15 is adapted to the existing connection members of segment 7 in the split plane 9. With low expenditure of work and time the said first portion 16 of the tool 15, usually a foot with fir tree profile 14, is inserted in a free place in a rotor groove in the split plane 9 and the second portion 17 of the tool 15 is joined by screw bolts to the lower housing segment 7.

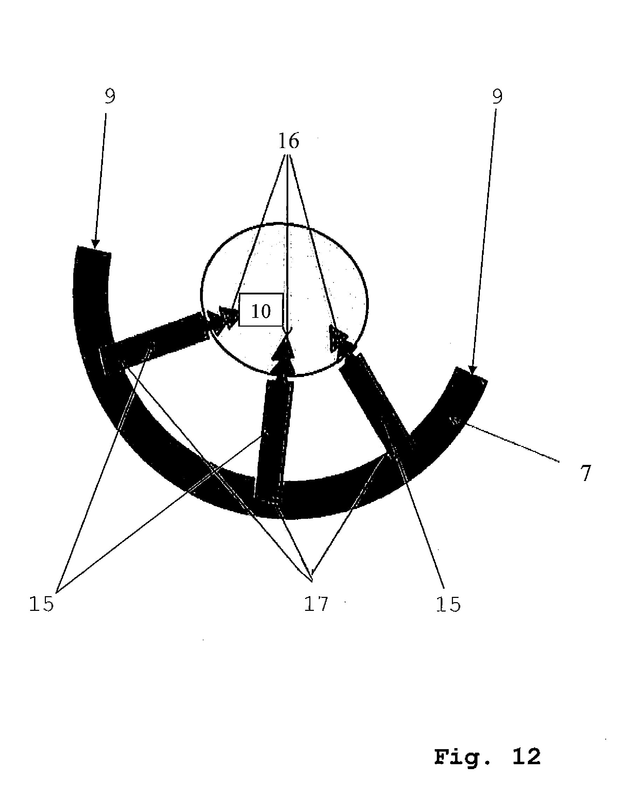

Fig. 12 illustrates an embodiment with direct connection of a number of tools 15, e.g. three tools 15, to the lower segment 7 at different circumferential positions. For this purpose suitable contours at the segment 7 may be used.

In practice the materials used and the dimensions can be chosen at will according to requirements and to the state of the art.

### REFERENCE NUMBERS

- 1: turbomachine
- 2: outer casing
- 3: upper segment of 2
- 4: lower segment of 2
- 5: inner casing
- 6: upper segment of 5
- 7: lower segment of 5
- 9: horizontal axis, split plane
- 10: rotor
- 11: longitudinal axis
- 12: vanes
- 13: blades
- 14: profile of rotor groove, profile of 16
- 15: tool for installing/uninstalling the lower segment 7
- 16: first portion (foot) of 15
- 17: second portion of 15
- 18: connection plate
- 19: dummy half ring
- 20: dummy half ring segment
- 21: through hole at 18 for e.g. a screw bolt
- 22: stiffener
- 23: platform

## Claims

1. Tool for installing or uninstalling a segment of an inner housing of a turbomachine (1), wherein this turbomachine (1) comprises an outer housing (2), at least partially surrounding an inner housing (5) and a rotor (10), concentrically arranged within the inner housing (5), the rotor (10) being equipped with a number of rotor grooves, and wherein the inner housing (5) is divided at an essentially horizontal split plane (9) into an upper segment (6) and a lower segment (7), **characterized in that** the tool (15) comprises a first portion (16), this portion (16) being insertable into any of said rotor grooves, and furthermore comprises a second portion (17), disposed at a distance from the first portion (16), this second portion (17) being connectable to the lower segment (7) of the inner housing (5).

2. Tool according to claim 1, **characterized in that** the first portion (16) comprises a section that is complementarily designed to the contour (14) of the rotor grooves.

3. Tool according to claim 1 or 2, **characterized in that** a section of the first portion (16) is designed as a fir tree (14).

4. Tool according to claim 1, at least comprising a first portion (16), designed for insertion into any of the rotor grooves, a second portion (17), designed to be connected to a part of the lower segment (7) of the inner housing (5), and a platform (23) connecting said first portion (16) with said second portion (17).

5. Tool according to claim 4, **characterized in that** the second portion (17) comprises an essentially rectangular connection plate (18).

6. Tool according to claim 5, **characterized in that** the connection plate (18) is essentially orthogonally joined to the platform (23).

7. Tool according to claim 5 or 6, **characterized in that** the platform (23) and the connection plate (18) do have the same width.

8. Tool according to one of claims 4 to 6, **characterized in that** the platform (23) and the connection plate (18) are supported by at least one stiffener (22).

9. Tool according to claim 6, **characterized in that** the at least one stiffener (22) is a stiffening plate.

10. Tool according to claim 6 or 7, **characterized in that** the stiffening plate (22) is joined to narrow sides of the platform (23) and the connection plate (18).

11. Tool according to any of claims 1 to 10, **characterized in that** the second portion (17) of tool (15) is equipped with one or more through holes (21) for a fastener.

12. Tool according to claim 11, **characterized in that** the fastener is a screwed bolt.

13. Tool according to claim 1, **characterized in that** the second portion (17) is designed to be connected to a part of the lower segment (7) of the inner housing (5) .

14. Tool according to claim 1, **characterized in that** the second portion (17) is designed to be connected to a dummy half ring (19), attached to the lower segment (7) of the inner housing (5).

15. Tool according to claim 1, **characterized in that** the second portion (17) is designed to be connected to a dummy segment (20), attached to the lower segment (7) .
